# DEMANDE DE BREVET EUROPEEN

(11) **EP 1 122 319 A1**
(43) Date de publication de la demande: **08.08.2001**
(21) Numéro de dépôt: 01420025.7
(22) Date de dépôt: 31.01.2001
(51) Int. Cl.: C21C 5/52, C21C 5/00, C22B 7/00, C22B 5/10

(54) **Procédé de recyclage des battitures d'acier allié au four électrique à arc en un produit ferro-silicium**

(30) Priorité: 03.02.2000 FR 0001382
(71) Demandeur: PECHINEY ELECTROMETALLURGIE, 92400 Courbevoie (FR)
(72) Inventeur: Poulalion, André, 01200 Bellegarde (FR)
(74) Mandataire: Mougeot, Jean-Claude

(57) **Abrégé**

L'invention a pour objet un procédé de recyclage des battitures d'aciers alliés consistant à mélanger ces battitures à de la silice et à un réducteur carboné pour obtenir, au four électrique à arc, un ferro-silicium à plus de 40% de silicium, contenant les éléments d'alliage des aciers, et à utiliser ce ferro-silicium comme agent de traitement et source d'éléments d'alliage lors de l'élaboration de ces aciers.

Elle a également pour objet un ferro-silicium contenant de 40 à 80% de silicium et de 1 à 5% de chrome.

Le procédé conduit à un rendement de récupération élevé pour les éléments d'alliage comme le chrome et le nickel.

## Description

### Domaine technique de l'invention

L'invention concerne le recyclage des battitures d'acier allié, c'est-à-dire des oxydes de surface issus de la coulée et de la transformation à chaud de ces aciers, de manière à récupérer le fer et les métaux d'alliage (notamment le chrome, le nickel, le cobalt, le vanadium ou le molybdène) contenus dans ces battitures. On entend par « acier allié » un acier contenant des additions volontaires de métaux d'alliage, par exemple un acier inoxydable ou réfractaire, un acier à outils ou un acier spécial.

### Etat de la technique

La coulée et la transformation à chaud, par laminage ou forgeage, des aciers alliés génèrent des quantités importantes de battitures qui contiennent non seulement du fer, mais également les éléments d'alliage ajoutés à ces aciers, notamment le chrome, le nickel et le molybdène dans le cas des aciers inoxydables, ou encore le tungstène, le cobalt, le vanadium pour les autres aciers spéciaux, ces éléments d'alliage ayant un coût est nettement plus élevé. La mise en décharge de ces battitures devient de plus en plus problématique et coûteuse au fur et à mesure que la législation sur la gestion des déchets devient plus contraignante. Il est donc de plus en plus intéressant économiquement de les recycler dans le processus d'élaboration de ces mêmes aciers. Il existe divers procédés de recyclage, soit des battitures seules, soit en mélange avec les poussières et les fumées générées au cours de l'élaboration des alliages en aciérie. Ces procédés traitent les déchets sous forme de boulets ou de briquettes agglomérés. Ces boulets sont ensuite, soit recyclés directement au four d'aciérie, soit traités au four rotatif à haute température ou au four à plasma, et conduisent à l'élaboration d'une fonte contenant les métaux nobles (Cr, Ni, Mo, etc.). Un exemple de cette technique est décrit dans le brevet US 4004918, déposé en 1974 par les sociétés Nisshin Steel et Japan Metals & Chemicals. Le principal inconvénient de ces procédés est le rendement insuffisant de la récupération des métaux nobles, qui, par exemple pour le chrome, ne dépasse pas 80%.
Le but de l'invention est de permettre le recyclage des battitures dans l'élaboration des aciers alliés avec un rendement élevé de récupération des métaux d'alliage et en utilisant un procédé simple et économique, ne faisant pas appel notamment à la préparation de boulets ou briquettes.

### Objet de l'invention

L'invention a pour objet un procédé de recyclage des battitures d'aciers alliés consistant à mélanger ces battitures à de la silice et à un réducteur carboné pour obtenir, au four électrique à arc, un ferro-silicium à plus de 40% de silicium, contenant les éléments d'alliage des aciers, et d'utiliser ce ferro-silicium pour le traitement de l'acier allié liquide et comme source d'éléments d'alliage lors de l'élaboration de ces aciers.
L'invention a également pour objet un ferrosilicium contenant (en poids) de 40 à 80% de silicium, de 1 à 5% de chrome et éventuellement d'autres éléments d'une teneur totale inférieure à 5%.

### Description de l'invention

L'invention repose sur la constatation, faite par la demanderesse, que le recyclage des battitures sous forme de ferro-silicium contenant du chrome, du nickel, du molybdène et/ou d'autres métaux d'alliage, et non d'une simple fonte contenant ces mêmes éléments, conduit à une augmentation significative du rendement de récupération des métaux d'alliage.
Le procédé selon l'invention peut être mis en oeuvre dans un four électrique à arc utilisé pour la fabrication de ferro-silicium à plus de 40% de silicium, par exemple les ferro-silicium à 65 ou 75% de silicium, à partir de quartz et de réducteurs carbonés, par exemple le coke et divers types de houille. Les matières premières, comme par exemple les tournures de fer, utilisées pour l'apport en fer sont alors remplacées, au moins partiellement, par les battitures, en quantité plus importante puisque ces battitures contiennent de 15 à 30% d'oxygène provenant des oxydes métalliques. Les battitures sont introduites dans le four telles quelles, sans qu'il y ait besoin d'un traitement préalable d'agglomération ou de bouletage. Elles sont utilisables pratiquement quelle que soit leur granulométrie. Si celle-ci est trop fine, inférieure par exemple à quelques dixièmes de mm, il peut être nécessaire d'ajouter à la charge des copeaux de bois en apport partiel de réducteur carboné.
L'ajustement des quantités de réducteurs doit tenir compte de l'oxygène présent, sachant qu'une partie des oxydes est réduite par l'oxydation des gaz SiO et CO traversant la charge, tandis que l'oxygène correspondant à l'eau contenue dans les battitures s'élimine par évaporation. De fait, la quantité de réducteurs carbonés nécessaire n'augmente que de quelques %. De même, la nécessité de réduire les oxydes entraîne une légère augmentation de la puissance électrique consommée à la tonne. Par contre, l'utilisation de battitures conduit à une légère augmentation du rendement en silicium, qui dépasse 90%.
L'analyse du laitier du four et des fumées montre que la quantité d'éléments d'alliage qu'ils contiennent ne dépasse pas quelques dizaines de ppm, ce qui montre que l'essentiel se retrouve dans le ferro-silicium produit. Dans le cas de l'utilisation de battitures d'aciers inoxydables, le ferro-silicium produit contient de 40 à 80% de silicium et de 1 à 5% de chrome. Dans le cas où on recycle les battitures d'une usine produisant à la fois des alliages inoxydables ferritiques et austénitiques, on arrive à un ferro-silicium contenant de l'ordre de 2 à 3% de chrome et de 0,5 à 1% de nickel en fonction de leur teneur dans les battitures, et le rendement de récupération est compris entre 90 et 95% pour le chrome et au-delà de 95% pour le nickel.
Le produit obtenu est ensuite utilisé, comme le ferro-silicium à 65 ou 75%, pour la désoxydation de l'acier lors de son élaboration en aciérie ou pour la réduction du laitier. Il peut servir également à ajuster la teneur en silicium de l'alliage. L'apport de chrome, de nickel et des autres éléments d'alliage permet d'économiser les quantités correspondantes de métaux apportés comme éléments d'alliage, notamment sous forme de ferro-alliages, ce qui ajoute à l'économie obtenue par la suppression de la mise en décharge des battitures. Par ailleurs, l'utilisation d'un four classique de fabrication de ferro-silicium permet d'éviter tout investissement spécifique dans le processus d'élaboration, d'autant qu'il est possible de basculer très rapidement du fonctionnement avec les battitures à un fonctionnement conventionnel avec les tournures de fer, voire d'utiliser un mélange des deux. On peut, par ce procédé, utiliser tous les types de battitures, à condition qu'elles contiennent moins de 1% de zinc.

### Exemple

Dans un four électrique à arc utilisé habituellement pour la fabrication du ferro-silicium à 75% de silicium, on a introduit une charge de composition suivante, rapportée à une tonne de quartz :

| | | | |
|---|---|---|---|
| Quartz : 1000 kg | Coke : 212 kg | Houille : 345 kg | Calcaire : 3,6 kg |

Battitures d'aciers inoxydables : 195 kg

La composition moyenne de ces battitures était la suivante (% en poids) :

| | | | | | | |
|---|---|---|---|---|---|---|
| Fe : 53,9 | Cr : 8,0 | Ni : 1,9 | Cu : 0,6 | Mn : 1 | Al : 1 | Ti : 0,01 |
| Ca : 8 | C : 3 | H₂O : 5 | O₂ : reste. | | | |

On a obtenu un ferro-silicium d'analyse moyenne (% en poids) :

| | | | | | |
|---|---|---|---|---|---|
| Si : 75,7 | Fe : 18,3 | Cr : 2,64 | Ni : 0,66 | Cu : 0,22 | Mn : 0,27 |
| Al : 1,03 | Ti : 0,27 | Ca : 0,68 | V : 0,017 | | |

Le laitier contenait en moyenne 60 ppm de chrome, ce qui indique que la quasi-totalité du chrome se retrouve dans le ferro-silicium.
Si l'on compare à la marche habituelle du four à ferro-silicium, on constate que l'apport de fer, rapporté à une tonne de quartz, aurait nécessité 138 kg de tournures de fer au lieu de 195 kg de battitures, l'apport de réducteurs carbonés aurait été réduit d'environ 2%, et l'énergie nécessaire réduite d'environ 7%. Par contre, le rendement en silicium est légèrement meilleur lorsqu'on utilise les battitures.

## Revendications

1. Procédé de recyclage des battitures d'aciers alliés consistant à mélanger ces battitures à de la silice et à un réducteur carboné pour obtenir, au four électrique à arc, un ferro-silicium à plus de 40% de silicium, contenant les éléments d'alliage des aciers alliés, et à utiliser ce ferro-silicium comme agent de traitement et source d'éléments d'alliage lors de l'élaboration de ces aciers alliés.

2. Procédé selon la revendication 1, caractérisé en ce que les aciers alliés sont des aciers inoxydables.

3. Procédé selon l'une des revendications 1 et 2, caractérisé en ce que les battitures sont introduites dans le four à leur granulométrie d'origine, et sans agglomération ni bouletage.

4. Procédé selon l'une des revendications 1 à 3, caractérisé en ce que une partie du réducteur carboné est apporté sous forme de copeaux de bois.

5. Ferro-silicium contenant de 40 à 80% de silicium, de 1 à 5% de chrome, et éventuellement d'autres éléments à une teneur totale inférieure à 5%.
